# EUROPÄISCHE PATENTANMELDUNG

(11) **EP 3 869 082 A1**
(43) Veröffentlichungstag der Anmeldung: **25.08.2021**
(21) Anmeldenummer: 20158506.4
(22) Anmeldetag: 20.02.2020
(51) Int. Cl.: F17C 13/04, F17C 1/06

(54) **HOCHDRUCKBEHÄLTER**

(71) Anmelder: Magna Energy Storage Systems GesmbH, 8261 Sinabelkirchen (AT)
(72) Erfinder: PUNTIGAM, David, 8522 Gross St.Florian (AT); PREITLER, Andreas, 8101 Gratkorn (AT); PUCHLEITNER, Rainer, 8052 Graz (AT)
(74) Vertreter: Zangger, Bernd

(57) **Zusammenfassung**

Ein Hochdruckbehälter umfassend einen Zylinder (10) als Mittelteil, wobei der Zylinder (10) aus einem Mehrschichtverbund-Kunststoff (11) besteht der eine Barriereschicht (12) umfasst, wobei der Hochdruckbehälter ferner zumindest eine Halbschale (13) an einem axialen Ende des Zylinders (10) umfasst, wobei die Halbschale (13) aus einem Mehrschichtverbund-Kunststoff (11) besteht der eine Barriereschicht (12) umfasst, wobei die Halbschale (13) ferner ein im wesentlichen rotationssymmetrisches Einlegeteil (1), nämlich ein Bossteil, umfasst, wobei das Einlegeteil (1) eine Hinterschneidung in Bezug auf eine Entformung in Richtung der Längsmittelachse des Einlegeteils (1) umfasst, wobei der Mehrschichtverbund-Kunststoff (11) der Halbschale (13) axial an beiden Seiten der Hinterschneidung des Einlegeteils (1) angeordnet ist.

## Beschreibung

### Gebiet der Erfindung

Die vorliegende Erfindung betrifft einen Hochdruckbehälter, insbesondere zur Speicherung eines Kraftstoffs für ein Kraftfahrzeug.

### Stand der Technik

Es ist bekannt das Hochdruckbehälter, beispielsweise zum Speichern von Wasserstoff als Kraftstoff für Kraftfahrzeuge, aus einer innenliegenden Schicht, dem sogenannten "Liner", und einer Wicklung von Fasermaterial um den Liner herum aufgebaut werden können.

Zur Herstellung eines Behälters ist es bekannt, die Technologien des Blasformens und Thermoformens einzusetzen. Die Herstellung beruht dann auf der Umformung von schlauch- oder plattenförmigen Halbzeugen. Diese werden durch Unterdruck und/oder Überdruck in ihre finale Form gebracht. Beispielsweise können zwei Halbschalen erzeugt werden, die aneinander gefügt werden, um einen Behälter zu bilden.

Für den Anwendungsfall von gasdichten Linern für Typ IV Behälter, die zur Druckspeicherung von Gasen eingesetzt werden, gibt es zwei gängige Produktionsmethoden. Zum einen das Blasformen von ganzen Linern, zum anderen die Methode der Herstellung von Segmenten des Behälters im Spritzguss und Extrusionsverfahren sowie eine nachgeschaltete Verbindung dieser Komponenten durch ein Fügeverfahren.

Die hierbei zum Einsatz kommenden Werkstoffe sind zumeist auf Basis von HDPE (High Density Polyethylen) oder Polyamiden.

Ein wichtiges Unterscheidungsmerkmal für Linerwerkstoffe sind die mechanischen Tieftemperatureigenschaften sowie die Emissionseigenschaften. Monolayermaterialien wie Polyamid verfügen über eine gute Sperreigenschaft für Gase, jedoch nicht über optimale Tieftemperatureigenschaften. HDPE hingegen verfügt über keine geeignete Sperrwirkung, jedoch über sehr gute Tieftemperatureigenschaften.

Speziell für Anwendungen im Bereich Wasserstoff kommt aus diesem Grund aktuell hauptsächlich Polyamid zum Einsatz. Jedoch sind dadurch vor allem für Blasformtechnologie Grenzen im Hinblick auf Bauteilgröße gesetzt. Die verfügbaren geeigneten Typen sind auf Grund ihrer aufwändigen Additivierung überdies teuer und problematisch beim Einsatz bei tiefen Temperaturen.

Hochdruckbehälter für Gase unterliegen im Zuge ihres Betriebs (Befüllen, Speichern und Entleeren) großen Temperaturschwankungen. Dies stellt hohe Anforderungen an die Materialien und im Speziellen an den Liner dar.

In Verbindung mit der Leichtbauweise und der Verwendung von Verbundwerkstoffen stellt sich in diesem Zusammenhang die Herausforderung die unterschiedlichen Materialien an der Fügestelle gasdicht miteinander zu verbinden.

### Zusammenfassung der Erfindung

Es ist eine Aufgabe der Erfindung, einen Hochdruckbehältern in dieser Hinsicht zu verbessern und insbesondere einen Hochdruckbehälter anzugeben, der auch in einem Übergangsbereich zu einem Bossteil die Anforderungen an Dichtheit und Permeation für einen Hochdruckbehälter erfüllt und dabei einfach und kostengünstig herstellbar ist.

Die Lösung der Aufgabe erfolgt durch einen Hochdruckbehälter umfassend einen Zylinder als Mittelteil, wobei der Zylinder aus einem Mehrschichtverbund-Kunststoff besteht der eine Barriereschicht umfasst, wobei der Hochdruckbehälter ferner zumindest eine Halbschale an einem axialen Ende des Zylinders umfasst, wobei die Halbschale aus einem Mehrschichtverbund-Kunststoff besteht der eine Barriereschicht umfasst, wobei die Halbschale ferner ein im wesentlichen rotationssymmetrisches Einlegeteil, nämlich ein Bossteil, umfasst, wobei das Einlegeteil eine Hinterschneidung in Bezug auf eine Entformung in Richtung der Längsmittelachse des Einlegeteils umfasst, wobei der Mehrschichtverbund-Kunststoff der Halbschale axial an beiden Seiten der Hinterschneidung des Einlegeteils angeordnet ist.

Eine "Hinterschneidung in Bezug auf eine Entformung in Richtung der Längsmittelachse des Einlegeteils" bedeutet, dass das Einlegeteil eine Ausformung aufweist, die weiter von der Längsmittelachse des Einlegeteils entfernt ist, als Bereiche des Einlegteils die axial vor und nach dieser Ausformung liegen, so dass ein Entfernen des Einlegeteils aus dem Kunststoff vor und nach dieser Ausformung bzw. dieser Hinterschneidung an sich problematisch ist. Die Ausformung bzw. Hinterschneidung kann insbesondere einen größeren Durchmesser aufweisen, als Bereiche des Einlegeteils vor und nach der Hinterschneidung.

Erfindungsgemäß wird als Material für den Liner, sowohl in dem durch den Zylinder gebildeten Mittelteil, als auch in zumindest einem, bevorzugt in beiden axialen Endbereichen des Behälters, ein Mehrschichtverbund verwendet. Derartige Mehrschicht-Kunststoffe können auf einfache Weise mittels Blasformen oder Tiefziehen bzw. Vakuumformen zu einer Halbschale geformt werden. Der Zylinder im Mittelteil kann beispielsweise ebenfalls blasgeformt oder beispielsweise extrudiert sein. Erfindungsgemäß wird ein Bossteil verwendet, das eine Hinterschneidung aufweist, in Bezug auf eine Entformung in Richtung der Längsmittelachse des Einlegeteils. Eine solche Hinterschneidung liegt vor, wenn das Einlegeteil in einem Bereich seiner axialen Erstreckung breiter ausgebildet ist, als in einem dahinter liegenden Bereich, der ebenfalls mit Kunststoff ausgefüllt ist. Auf beiden Seiten der Hinterschneidung, axial vor und hinter der Hinterschneidung, ist erfindungsgemäß der Mehrschichtverbund-Kunststoff angeordnet. Das üblicherweise metallische Bossteil ist somit in den, die Barriereschicht aufweisenden, Kunststoff eingebettet. Der Hochdruckbehälter weist somit gute Permeationseigenschaften auch im Bereich des Übergangs zum Bossteil auf. Die Herstellung der Halbschale mit eingebettetem Bossteil und des gesamten Hochdruckbehälters ist dennoch auf kostengünstige Weise möglich, da, wie später näher beschrieben wird, das Einbringen des Kunststoffes trotz Hinterschneidung mittels Blasformen oder Vakuumtiefziehen möglich ist.

Vorzugsweise wird die Hinterschneidung durch ein Fußteil an dem, dem Behälterinneren zugewandten Ende des Einlegeteils, gebildet, welches einen größeren Durchmesser aufweist als ein Mittelteil des Einlegeteils.

Bevorzugt weist das Fußteil zumindest eine Nut auf, die mit dem Mehrschichtverbund-Kunststoff der Halbschale gefüllt ist, bevorzugt mehrere Nuten. Durch die Anwesenheit des Kunststoffs in den Nuten kann der Formschluss zwischen Bossteil und Kunststoff des Liners verbessert werden.

Bevorzugt bildet das Fußteil im Wesentlichen einen Hohlkegel oder Hohlzylinder.

Besonders bevorzugt läuft zumindest eine mit dem Mehrschichtverbund-Kunststoff der Halbschale gefüllte Nut an einem Innenumfang des Fußteils um.

Der Mehrschichtverbund-Kunststoff des Zylinders geht bevorzugt in den Mehrschichtverbund-Kunststoff der Halbschale über. Die Barriereschicht verläuft bevorzugt möglichst kontinuierlich am Übergang zwischen Zylinder und Halbschale.

Der Mehrschichtverbund-Kunststoff der Halbschale, und bevorzugt auch der Mehrschichtverbund-Kunststoff des Zylinders, umfasst vorzugsweise zumindest eine Schicht aus HDPE und eine Barriereschicht, insbesondere EVOH, bevorzugt auch ein Regranulat, also eine Regrindschicht, und/oder eine zweite HDPE Schicht und/oder zumindest eine Haftvermittlerschicht.

Vorzugsweise umfasst der Hochdruckbehälter zwei Halbschalen an den axialen Enden des Zylinders, wobei bevorzugt beide Halbschalen so ausgebildet sind, wie zuvor für die erste Halbschale beschrieben.

Der Zylinder und die beiden Halbschalen sind bevorzugt mit einem Fasermaterial umwickelt, bevorzugt mit einem Verbundwerkstoff umfassend Kohlefasern und/oder Glasfasern und/oder Epoxidharz.

Die Herstellung eines erfindungsgemäßen Hochdruckbehälters kann bevorzugt mit einem Werkzeug erfolgen, mit einer ersten Werkzeughälfte die eine Matrize bildet, und die Schritte umfassen:
- eine vorgeheizte erste Kunststoffplatte wird auf die erste Werkzeughälfte gelegt,
- die erste Kunststoffplatte wird mittels Unterdruck oder Druck an die erste Werkzeughälfte gesaugt oder gepresst,
- hierdurch wird der Kunststoff der ersten Kunststoffplatte bereichsweise hinter einer Hinterschneidung eines Einlegeteils, nämlich des Bossteils, seitlich beabstandet vom Einlegeteil angeordnet, oder das Einlegeteil wird, nach dem Saugen oder Pressen der ersten Kunststoffplatte an die erste Werkzeughälfte, so positioniert, dass Kunststoff der ersten Kunststoffplatte bereichsweise hinter einer Hinterschneidung des Einlegeteils seitlich beabstandet vom Einlegeteil angeordnet ist,
- danach wird mittels eines Schiebers oder eines Unterdrucks oder eines Drucks der Kunststoff der ersten Kunststoffplatte hinter der Hinterschneidung von seitlich beabstandet des Einlegeteils an das Einlegeteil gedrückt oder gesaugt, so dass ein Raum hinter der Hinterschneidung des Einlegeteils mit dem Kunststoff gefüllt wird.

Bevorzugt wird somit das Bossteil als Einlegeteil in das Werkzeug eingelegt und in einem Blas- oder Tiefziehvorgang mit der Kunststoffplatte, insbesondere einem permeationsdichten Mehrschichtverbund, umschlossen, sodass der Kunststoff auch in Bereiche hinter einer Hinterschneidung gelangt. Dazu wird zunächst eine Kunststoffplatte mittels Unterdruck oder Druck an die erste Werkzeughälfte gesaugt oder gepresst. Dabei kann das Einlegeteil bereits so positioniert sein, dass durch das Saugen oder Pressen des Kunststoffs an die erste Werkzeughälfte der Kunststoff der ersten Kunststoffplatte bereichsweise hinter einer Hinterschneidung des Einlegeteils, seitlich beabstandet vom Einlegeteil, angeordnet wird.

Alternativ kann erst nach dem Saugen oder Pressen des Kunststoffs an die erste Werkzeughälfte das Einlegeteil so positioniert werden, dass Kunststoff der ersten Kunststoffplatte hinter der Hinterschneidung seitlich beabstandet vom Einlegeteil angeordnet wird, beispielsweise in dem das Einlegeteil verschoben wird oder das Einlegeteil erst jetzt in die erste Werkzeughälfte eingebracht wird.

Danach wird mittels eines Schiebers oder eines Unterdrucks oder eines Drucks der Kunststoff der ersten Kunststoffplatte von seitlich des Einlegeteils an das Einlegeteil heran gedrückt oder gesaugt, so dass ein Raum hinter der Hinterschneidung des Einlegeteils mit dem zuvor seitlich befindlichen Kunststoff gefüllt wird und ein Formschluss entsteht.

Dadurch gelangt der Kunststoff, trotz einfacher Herstellung mittels Blasformen bzw. Vakuumformen, auch in Bereiche hinter dem Einlegeteil und es ergibt sich eine verbesserte dichtende Wirkung des Kunststoffes, insbesondere Mehrschichtverbundes, zum Einlegeteil, insbesondere zum metallischen Bossteil, hin. Um den Einschluss in den Kunststoff zu erreichen werden Schieber und/oder ein Vakuum bzw. Druckluft verwendet.

"Seitlich beabstandet" bedeutet dabei im Wesentlichen beabstandet von einer Längsmittelachse des Einlegeteils, die bevorzugt auch mit der Längsmittelachse des Druckbehälters zusammen fallen kann. Der Kunststoff kann zunächst im Wesentlichen parallel zur Längsmittelachse des Einlegeteils und bevorzugt auch zur umgebenden Behälterwand verlaufen. Der Kunststoff wird dann im Wesentlichen normal auf die Längsmittelachse des Einlegeteils, insbesondere allseitig radial nach innen, zum Einlegeteil hin, gesaugt, geblasen oder geschoben.

Dass das Saugen oder Drücken des Kunststoffs an das Einlegeteil heran zeitlich nach dem Positionieren des Einlegeteils, so dass der Kunststoff bereichsweise seitlich beabstandet vom Einlegeteil angeordnet ist, erfolgt, kann auch in einem kontinuierlichen Prozess erfolgen, so dass jeweils das Einlegeteil weiter bewegt und positioniert wird und dabei jeweils weiter neu Kunststoff herangesaugt oder gedrückt wird, so dass die Positionierung des Einlegeteils und das Heransaugen oder Drücken des Kunststoffs hinter die Hinterschneidung quasi gleichzeitig erfolgt.

Die so entstehende Halbschale kann in einem weiteren Prozessschritt mit einer zweiten Halbschale oder einem extrudierten oder blasgeformten Mehrschichtzylinder verbunden werden. Dies bildet den Kern und somit die Basis für einen weiteren Wickelprozess, in dem der Behälter seine mechanische Festigkeit durch einen Verbundwerkstoff aus Kohle und/oder Glas und Epoxidharz erhalten kann.

Vorzugsweise umfasst das Werkzeug eine zweite Werkzeughälfte, die einen Stempel bildet, wobei die zweiten Werkzeughälfte auf die erste Werkzeughälfte gefahren wird um die innere Kontur der Halbschale auszubilden. Die zweite Werkzeughälfte kann dazu die Form der ersten Kunststoffplatte im Inneren der Halbschale ausformen. Die zweite Werkzeughälfte kann stattdessen auch mit einer zweiten Kunststoffplatte bestückt sein, die die innere Kontur der Halbschale ausbildet.

Vorzugsweise wird das Einlegeteil, nach dem Saugen oder Pressen der ersten Kunststoffplatte an die erste Werkzeughälfte, in Relation zur ersten Werkzeughälfte angehoben, um das Einlegeteil so zu positionieren, dass Kunststoff der ersten Kunststoffplatte hinter der Hinterschneidung seitlich beabstandet vom Einlegeteil angeordnet wird. Das Anheben kann mit Hilfe einer beweglichen Aufnahme für das Einlegeteil erfolgen. Das Einlegeteil kann dabei behälteraußenseitig an der ersten Kunststoffplatte angeordnet sein und das Anheben kann somit entlang der Längsmittelachse des Einlegeteils und bevorzugt auch entlang der Längsmittelachse des Hochdruckbehälters erfolgen, insbesondere in Richtung zum späteren Zentrum des Behälters hin.

Bevorzugt wird das Einlegeteil nach dem Füllen des Raums hinter der Hinterschneidung des Einlegeteils mit dem Kunststoff wieder abgesenkt, in Relation zur ersten Werkzeughälfte. Besonders bevorzugt erfolgt das Absenken gleichzeitig mit dem Verfahren der zweiten Werkzeughälfte auf die erste Werkzeughälfte.

Gemäß einer anderen Ausführungsform wird das Einlegeteil erst nach dem Saugen oder Pressen der ersten Kunststoffplatte an die erste Werkzeughälfte auf die erste Kunststoffplatte gelegt, um das Einlegeteil so zu positionieren, dass Kunststoff der ersten Kunststoffplatte hinter der Hinterschneidung seitlich beabstandet vom Einlegeteil angeordnet wird. Das Einlegeteil kann somit behälterinnenseitig an der ersten Kunststoffplatte angeordnet sein. Eine zweite Kunststoffplatte kann wiederum behälterinnenseitig des Einlegeteils angeordnet werden.

Der Kunststoff der ersten Kunststoffplatte kann axial hinter dem mit Kunststoff gefüllten Raum hinter der Hinterschneidung, abgeschnitten werden, so dass hinter der Hinterschneidung, insbesondere behälteraußenseitig der Hinterschneidung, kein Kunststoff mehr vorliegt.

Bevorzugt wird eine vorgeheizte zweite Kunststoffplatte auf die zweite Werkzeughälfte gelegt, danach die zweite Kunststoffplatte mittels Unterdruck oder Druck an die zweite Werkzeughälfte gesaugt oder gepresst, und die zweite Werkzeughälfte mit der zweiten Kunststoffplatte auf die erste Werkzeughälfte gefahren, um die innere Kontur der Halbschale auszubilden.

Bevorzugt ist die erste Kunststoffplatte ein Mehrschichtverbund, wobei der Mehrschichtverbund bevorzugt eine Schicht aus HDPE (High Density Polyethylen) und eine Barriereschicht, insbesondere EVOH (EthylenVinylalkohol-Copolymer), umfasst. Besonders bevorzugt umfasst der Mehrschichtverbund auch ein Regrindmaterial bzw. Regranulat und/oder ein oder mehrere Haftvermittlerschichten. HDPE bildet bevorzugt die äußerste Schicht des Mehrschichtverbundes und kann zusätzlich auch die innerste Schicht bilden.

Ein Verfahren zur Herstellung eines Hochdruckbehälters umfasst bevorzugt, dass eine Halbschale hergestellt wird durch ein Verfahren wie zuvor beschrieben, wobei die Halbschale mit einer weiteren Halbschale - die beispielsweise ebenfalls ein Einlegeteil umfassen kann und die auf die selbe zuvor beschriebene Art hergestellt sein kann - oder mit mindestens einem - bevorzugt extrudierten oder blasgeformten - Zylinder und einer Endkappe verbunden wird, um einen geschlossenen Behälter zu bilden.

Der geschlossene Behälter wird vorzugsweise mit einem Fasermaterial umwickelt, bevorzugt mit einem Verbundwerkstoff umfassend Kohlefasern und/oder Glasfasern und/oder Epoxidharz.

### Kurzbeschreibung der Zeichnungen

Die Erfindung wird im Folgenden beispielhaft unter Bezugnahme auf die Zeichnungen beschrieben.
- Fig. 1 - Fig. 6: sind Schnittansichten die Schritte eines Verfahrens zur Herstellung einer Halbschale für einen erfindungsgemäßen Hochdruckbehälter in einer ersten Ausführungsform zeigen.

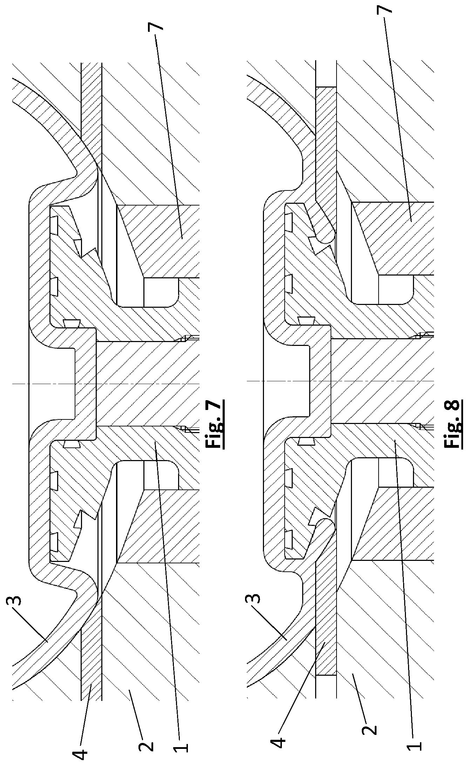

- Fig. 7: ist eine Detaildarstellung der Fig. 3 im Bereich um die Hinterschneidung des Einlegeteils 1.
- Fig. 8: ist eine Detaildarstellung der Fig. 4 im Bereich um die Hinterschneidung des Einlegeteils 1.
- Fig. 9 - Fig. 14: sind Schnittansichten die Schritte eines Verfahrens zur Herstellung einer Halbschale für einen erfindungsgemäßen Hochdruckbehälter in einer zweiten Ausführungsform zeigen.
- Fig. 15: ist eine Schnittansicht eines erfindungsgemäßen Hochdruckbehälters.

### Detaillierte Beschreibung der Erfindung

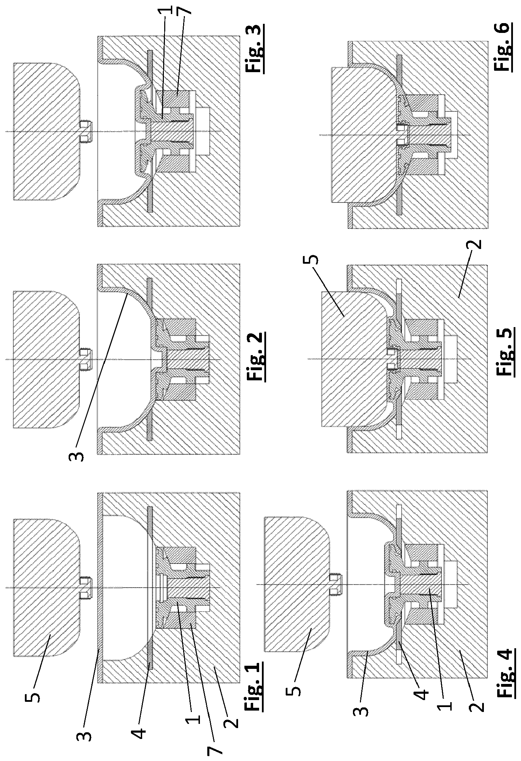

In den Fig. 1-6 ist ein Verfahren zur Herstellung einer Halbschale für einen erfindungsgemäßen Hochdruckbehälter dargestellt.

Es wird ein Werkzeug verwendet mit einer ersten Werkzeughälfte 2, die eine Matrize bildet, und mit einer zweiten Werkzeughälfte 5, die einen Stempel bildet.

Das Werkzeug besteht somit aus zwei Werkzeughälften wobei in der ersten Werkzeughälfte 2, bevorzugt der unteren Werkzeughälfte, das Einlegeteil auf einer beweglichen Aufnahme 7 positioniert wird. Die zweite Werkzeughälfte 5, bevorzugt die obere Werkzeughälfte, fungiert als Stempel, um am Ende des Prozesses eine Verpressung aufzubringen. Zusätzlich kann die zweite Werkzeughälfte 5 auch mit einem zweiten Einlegeteil bestückt werden. Mit Hilfe von im Werkzeug vorgesehenen Schiebern 4 und/oder Vakuum wird der Kunststoff an die für den Formschluss notwendigen Stellen gebracht.

Dazu wird eine vorgeheizte erste Kunststoffplatte 3 auf die erste Werkzeughälfte 2 gelegt und die erste Kunststoffplatte 3 mittels Unterdruck oder Druck an die erste Werkzeughälfte 2 gesaugt oder gepresst. Danach wird das Einlegeteil 1, also das Bossteil, so positioniert, dass Kunststoff der ersten Kunststoffplatte 3 bereichsweise hinter einer Hinterschneidung, seitlich beabstandet vom Einlegeteil 1, angeordnet ist. Alternativ kann auf das Verfahren des Einlegeteils 1 auch verzichtet werden, so dass der Kunststoff gleich auf ein richtig positioniertes Einlegeteil 1, entsprechend Fig. 3, gesaugt wird.

Dann wird mittels eines Schiebers 4 oder eines Unterdrucks oder eines Drucks der Kunststoff der ersten Kunststoffplatte 3 hinter der Hinterschneidung von seitlich beabstandet des Einlegeteils 1 an das Einlegeteil 1 gedrückt oder gesaugt, so dass ein Raum hinter der Hinterschneidung des Einlegeteils 1 mit dem Kunststoff gefüllt wird.

Schließlich wird die zweiten Werkzeughälfte 5 auf die erste Werkzeughälfte 2 gefahren, um die innere Kontur der Halbschale auszubilden.

Das in den Fig. 1 bis 6 dargestellt Singlesheet-Verfahren zeigt im Einzelnen folgende Schritte:
Im ersten Schritt des Singlesheet-Verfahrens (Fig. 1) wird die eine Werkzeughälfte, nämlich die erste Werkzeughälfte 2, mit dem Einlegeteil 1 - nämlich einem Bossteil - und einer vorgeheizten Kunststoffplatte 3 bestückt. Das Einlegeteil 1 befindet sich in der Ausgangsposition.

Optional kann an dieser Stelle auch die zweite Werkzeughälfte 5 mit einem weiteren Einlegteil bestückt werden. Die Kunststoffplatte 3 wird mit Hilfe von Vakuum in die erste Werkzeughälfte 2, welche die äußere Bauteilgeometrie abbildet, eingesaugt.

Um den für den Formschluss notwendigen Raum hinter der Hinterschneidung des Einlegteiles 1 mit Kunststoff zu füllen, ist das Einlegteil 1 in der ersten Werkzeughälfte 2 auf einer beweglichen Aufnahme 7 positioniert. Durch Anheben des Bauteils und den beispielsweise gleichzeitigen Einsatz von Vakuum und/oder Schiebern 4 wird der Raum hinter der Hinterschneidung des Bauteiles gefüllt - Fig. 3 und Fig. 4.

Im nächsten Schritt (Fig. 5) wird die zweite Werkzeughälfte 5 mit einer definierten Schließkraft auf die erste Werkzeughälfte 2 abgesenkt und die innere Kontur des Bauteiles abgebildet. Im Zuge dieses Prozessschrittes kann das Einlegeteil 1 gegebenenfalls wieder in die Ausgangsposition gebracht werden. Dadurch wird der Kunststoff hinter den Hinterschneidungen zusätzlich verpresst und der Formschluss zwischen Einlegeteil 1 und Kunststoff der ersten Kunststoffplatte 3 erhöht.

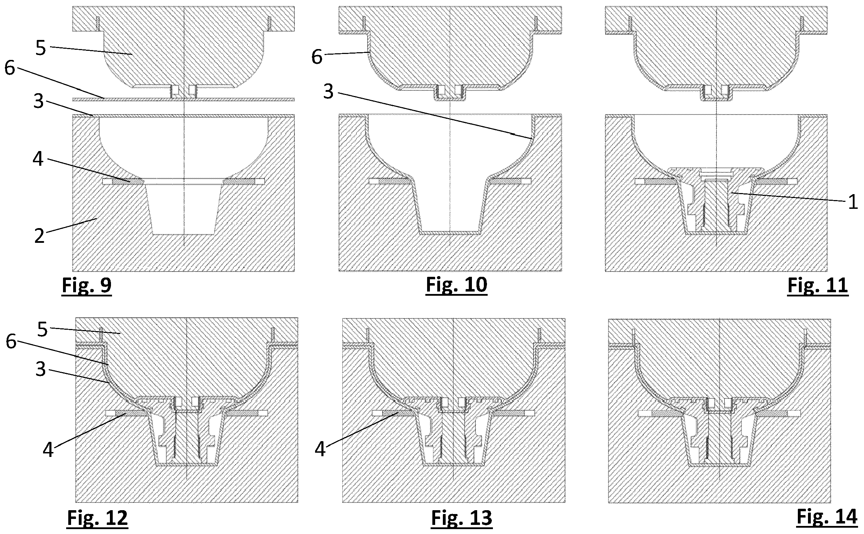

Eine alternative Ausführung des Herstellungsverfahrens zeigen die Fig. 9 bis Fig. 14, nämlich ein Twinsheet-Verfahren zur Herstellung der Halbschale.

Im ersten Schritt des Twinsheet-Verfahrens werden beide Werkzeughälften 2, 5 mit jeweils einer vorgeheizten Kunststoffplatte 3, 6 bestückt (Fig. 9). Optional kann an dieser Stelle auch die zweite Werkzeughälfte 5 mit einem Einlegeteil bestückt werden. Die Kunststoffplatten 3, 6 werden mit Hilfe von Vakuum in bzw. an die jeweiligen Werkzeughälften 2, 5 gesaugt, welche die äußere bzw. innere Bauteilgeometrie abbilden (Fig. 10).

Im nächsten Schritt wird in die erste Werkzeughälfte 2 das zu umschließende Einlegeteil 1 eingelegt (Fig. 11).

Mit Hilfe von Vakuum und/oder Schiebern 4 wird der Raum hinter der für den Formschluss notwendigen Hinterschneidung des Einlegeteiles 1 mit Kunststoff gefüllt (Fig. 12). Das überschüssige Material wird durch in das Werkzeug eingebrachten Schneidkanten hinter der Hinterschneidung abgetrennt (Fig. 13). Diese Schneiden können, wie in Fig. 13, auch in den Schiebern 4 enthalten sein. Fig. 14 zeigt das fertige Bauteil, wobei der überschüssige Kunststoff, unterhalb der Hinterschneidung und der Schieber 4, abgetrennt ist.

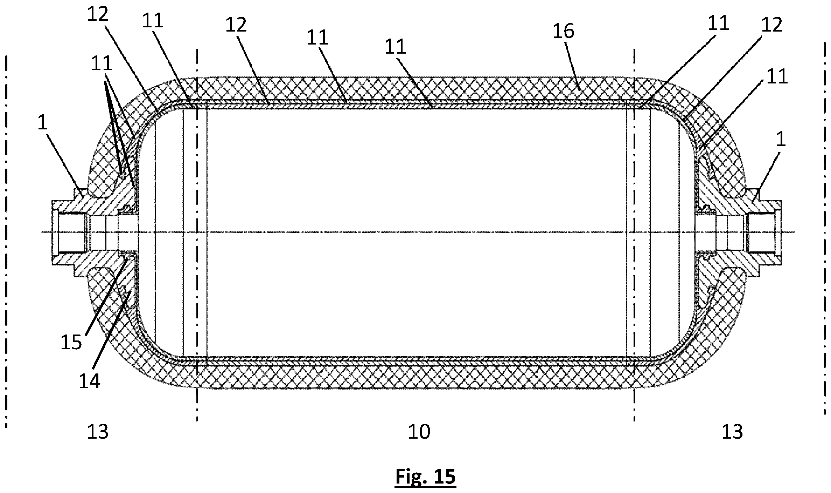

Ein erfindungsgemäßer Hochdruckbehälter ist in Fig. 15 dargestellt. Der Hochdruckbehälter umfasst einen Zylinder 10 als Mittelteil, wobei der Zylinder 10 aus einem Mehrschichtverbund-Kunststoff 11 besteht der eine Barriereschicht 12 umfasst, wobei der Hochdruckbehälter ferner zumindest eine Halbschale 13 an einem axialen Ende des Zylinders 10 umfasst, wobei die Halbschale 13 aus einem Mehrschichtverbund-Kunststoff 11 besteht, der eine Barriereschicht 12 umfasst, wobei die Halbschale 13 ferner ein im wesentlichen rotationssymmetrisches Einlegeteil 1, nämlich ein Bossteil, umfasst, wobei das Einlegeteil 1 eine Hinterschneidung in Bezug auf eine Entformung in Richtung der Längsmittelachse des Einlegeteils 1 umfasst, wobei der Mehrschichtverbund-Kunststoff 11 der Halbschale 13 axial an beiden Seiten der Hinterschneidung des Einlegeteils 1 angeordnet ist.

Die Hinterschneidung wird durch ein Fußteil 14 an dem, dem Behälterinneren zugewandten Ende des Einlegeteils 1, gebildet, welches einen größeren Durchmesser aufweist als ein Mittelteil des Einlegeteils 1. Der Mehrschichtverbund-Kunststoff 11 ist axial an beiden Seiten des Fußteils 14 angeordnet.

Das Fußteil 14 weist mehrere Nuten 15 auf, die mit dem Mehrschichtverbund-Kunststoff 11 der Halbschale 13 gefüllt sind.

Das Einlegeteil 1 weist im Wesentlichen die Form eines Hohlzylinders auf. Das Fußteil 14 weist im Wesentlichen die Form eines Hohlkegels auf.

Eine mit dem Mehrschichtverbund-Kunststoff 11 der Halbschale 13 gefüllte Nut 15 läuft an einem Innenumfang des Fußteils 14 um.

Der Mehrschichtverbund-Kunststoff 11 des Zylinders 10 geht in den Mehrschichtverbund-Kunststoff 11 der Halbschale 13 über.

Der Mehrschichtverbund-Kunststoff 11 der Halbschale 13 sowie auch des Zylinders 10 umfasst eine Schicht aus HDPE als äußerste Schicht und eine Barriereschicht 12 aus EVOH. Das HDPE kann als HDPE-S (Schwarz) vorliegen, danach kann eine Regranulatschicht angeordnet sein, ein Haftvermittler, die EVOH Schicht, optional wieder ein Haftvermittler und optional auch als innerste Schicht wieder eine HDPE Schicht.

Der Hochdruckbehälter umfasst zwei Halbschalen 13 an den axialen Enden des Zylinders 10, wobei beide Halbschalen 13 so ausgebildet sind, wie zuvor beschrieben, also ein Bossteil 1 aufweisen, dass in den Mehrschichtverbund-Kunststoff 11 eingebettet ist.

Der Zylinder 10 und die beiden Halbschalen 13 sind mit einem Fasermaterial 16 umwickelt, bevorzugt mit einem Verbundwerkstoff umfassend Kohlefasern und/oder Glasfasern und/oder Epoxidharz.

Insgesamt wird somit ein Hochddruckbehälter angegeben, der der Speicherung von Gasen unter hohem Druck dienen kann. Dieser ist in Leichtbauweise ausgeführt und besitzt einen mehrteiligen Mehrschicht-Kunststoffliner, bestehend aus zwei Domkappen 13 und einem Zylinder 10, welcher die Gasdichtheit sicherstellt und eine Permeationsbarriere 12 enthält.

In den beiden Domkappen 13 sind Bossteile 1, nämlich ein "Headstock" und ein "Tailstock" integriert.

Die Permeationseigenschaften liefert sowohl in den Domkappen 13 als auch im Zylinderrohr 10 eine im Schichtaufbau des Liners enthaltene Sperrschicht bzw. Barriereschicht 12.

Der Hochdruckbehälter bekommt seine mechanische Festigkeit durch einen faserverstärkten Verbund 16, welcher im Wickelprozess auf den Kunststoffliner aufgebracht und anschließend ausgehärtet wird.

### Bezugszeichenliste

- 1: Einlegeteil, Bossteil
- 2: erste Werkzeughälfte
- 3: erste Kunststoffplatte
- 4: Schieber
- 5: zweite Werkzeughälfte
- 6: zweite Kunststoffplatte
- 7: Aufnahme
- 10: Zylinder
- 11: Mehrschichtverbund-Kunststoff
- 12: Barriereschicht
- 13: Halbschale
- 14: Fußteil
- 15: Nut
- 16: Fasermaterial

## Patentansprüche

1. Hochdruckbehälter umfassend einen Zylinder (10) als Mittelteil, wobei der Zylinder (10) aus einem Mehrschichtverbund-Kunststoff (11) besteht der eine Barriereschicht (12) umfasst, wobei der Hochdruckbehälter ferner zumindest eine Halbschale (13) an einem axialen Ende des Zylinders (10) umfasst, wobei die Halbschale (13) aus einem Mehrschichtverbund-Kunststoff (11) besteht der eine Barriereschicht (12) umfasst, wobei die Halbschale (13) ferner ein im wesentlichen rotationssymmetrisches Einlegeteil (1), nämlich ein Bossteil, umfasst, wobei das Einlegeteil (1) eine Hinterschneidung in Bezug auf eine Entformung in Richtung der Längsmittelachse des Einlegeteils (1) umfasst, wobei der Mehrschichtverbund-Kunststoff (11) der Halbschale (13) axial an beiden Seiten der Hinterschneidung des Einlegeteils (1) angeordnet ist.

2. Hochdruckbehälter nach Anspruch 1,
**dadurch gekennzeichnet, dass** die Hinterschneidung durch ein Fußteil (14) an dem, dem Behälterinneren zugewandten Ende des Einlegeteils (1), gebildet wird, welches einen größeren Durchmesser aufweist als ein Mittelteil des Einlegeteils (1).

3. Hochdruckbehälter nach Anspruch 2,
**dadurch gekennzeichnet, dass** das Fußteil (14) zumindest eine Nut (15) aufweist, die mit dem Mehrschichtverbund-Kunststoff (11) der Halbschale (13) gefüllt ist, bevorzugt mehrere Nuten (15).

4. Hochdruckbehälter nach Anspruch 2 oder 3,
**dadurch gekennzeichnet, dass** das Fußteil (14) im Wesentlichen einen Hohlkegel oder Hohlzylinder bildet und bevorzugt zumindest eine mit dem Mehrschichtverbund-Kunststoff (11) der Halbschale (13) gefüllte Nut (15) an einem Innenumfang des Fußteils (14) umläuft.

5. Hochdruckbehälter nach zumindest einem der vorhergehenden Ansprüche,
**dadurch gekennzeichnet, dass** der Mehrschichtverbund-Kunststoff (11) des Zylinders (10) in den Mehrschichtverbund-Kunststoff (11) der Halbschale (13) übergeht.

6. Hochdruckbehälter nach zumindest einem der vorhergehenden Ansprüche,
**dadurch gekennzeichnet, dass** der Mehrschichtverbund-Kunststoff (11) der Halbschale (13) zumindest eine Schicht aus HDPE und eine Barriereschicht (12), insbesondere EVOH, umfasst, bevorzugt auch ein Regranulat und/oder eine zweite HDPE Schicht und/oder zumindest eine Haftvermittlerschicht umfasst.

7. Hochdruckbehälter nach zumindest einem der vorhergehenden Ansprüche,
**dadurch gekennzeichnet, dass** der Hochdruckbehälter zwei Halbschalen (13) an den axialen Enden des Zylinders (10) umfasst, wobei bevorzugt beide Halbschalen (13) so ausgebildet sind, wie in zumindest einem der vorhergehenden Ansprüche beschrieben.

8. Hochdruckbehälter nach zumindest einem der vorhergehenden Ansprüche,
**dadurch gekennzeichnet, dass** der Zylinder (10) und die beiden Halbschalen (13) mit einem Fasermaterial (16) umwickelt sind, bevorzugt mit einem Verbundwerkstoff umfassend Kohlefasern und/oder Glasfasern und/oder Epoxidharz.
